# FASCICULE DE BREVET EUROPEEN

(11) **EP 2 018 322 B1**
(45) Date de publication et mention de la délivrance du brevet: **09.09.2009**
(21) Numéro de dépôt: 07729069.0
(22) Date de dépôt: 14.05.2007
(51) Int. Cl.: B64D 27/26

(54) **DISPOSITIF D'ACCROCHAGE D'UN MOTEUR D'AERONEF**
VORRICHTUNG ZUR BEFESTIGUNG EINES FLUGZEUGMOTORS
DEVICE FOR ATTACHING AN AIRCRAFT ENGINE

(30) Priorité: 16.05.2006 FR 0651753
(43) Date de publication de la demande: 28.01.2009
(73) Titulaire: AIRBUS France, 31060 Toulouse Cédex (FR)
(72) Inventeur: BEAUFORT, Jacques, F-31700 Blagnac (FR)
(74) Mandataire: Ilgart, Jean-Christophe
(86) Numéro de dépôt international: PCT/EP2007/054617
(87) Numéro de publication internationale: WO 2007/131979

(56) Documents cités:
- EP-A1- 0 934 877
- EP-A1- 1 300 337
- FR-A1- 2 770 486

## Description

### DOMAINE TECHNIQUE

La présente invention se rapporte de façon générale à un dispositif d'accrochage d'un moteur d'aéronef, par exemple destiné à être interposé entre une voilure d'aéronef et le moteur concerné, ainsi qu'à un ensemble moteur comprenant un tel dispositif d'accrochage.

L'invention peut être utilisée sur tout type d'aéronef équipé de turboréacteurs ou de turbopropulseurs.

Ce type de dispositif d'accrochage, également appelé mât d'accrochage ou « EMS » (de l'anglais « Engine Mounting Structure »), peut indifféremment être employé pour suspendre un moteur au-dessous de la voilure de l'aéronef, monter ce moteur au-dessus de cette même voilure, ou bien encore pour rapporter ce moteur en partie arrière du fuselage de l'aéronef.

### ETAT DE LA TECHNIQUE ANTERIEURE

Un tel dispositif d'accrochage est en effet habituellement prévu pour constituer l'interface de liaison entre un turbomoteur et une voilure de l'aéronef. Il permet de transmettre à la structure de cet aéronef les efforts générés par son turbomoteur associé, et autorise également le cheminement du carburant, des systèmes électriques, hydrauliques, et air entre le moteur et l'aéronef.

Afin d'assurer la transmission des efforts, le dispositif d'accrochage comporte une structure rigide, souvent du type « caisson », c'est-à-dire formée par l'assemblage de longerons supérieurs et inférieurs et de longerons/panneaux latéraux raccordés entre eux par l'intermédiaire de nervures transversales.

D'autre part, le dispositif est muni d'un de moyens d'accrochage interposés entre le turbomoteur et la structure rigide, ces moyens comportant globalement deux attaches moteur, ainsi qu'un dispositif de reprise des efforts de poussée générés par le turbomoteur.

Dans l'art antérieur, ce dispositif de reprise comprend par exemple deux bielles latérales raccordées d'une part à une partie arrière du carter de soufflante du turbomoteur, et d'autre part à une attache arrière fixée sur le carter central de ce dernier.

De la même façon, le dispositif d'accrochage comporte également une autre série d'attaches constituant un système de montage interposé entre la structure rigide et la voilure de l'aéronef, ce système étant habituellement composé de deux ou trois attaches.

Enfin, le mât est pourvu d'une structure secondaire assurant la ségrégation et le maintien des systèmes tout en supportant des carénages aérodynamiques.

Pour assurer la fixation du dispositif de reprise des efforts de poussée sur la structure rigide du mât d'accrochage, également dénommée structure primaire, ce dispositif comporte généralement une ferrure principale montée fixement sur l'un des longerons du caisson, dit longeron de support. Des moyens de fixation appropriés sont donc utilisés pour permettre un tel assemblage de la ferrure principale sur le longeron de support, ces moyens de fixation pouvant notamment intégrer des éléments du type vis de traction et écrou à barillet à collerette déformée assurant un serrage de la vis vissée dans cet écrou à barillet. Document FR 2 770 486 décrit un dispositif d'accrochage d'un moteur d'aéronef selon le préambule de la revendication 1.

Si l'utilisation d'écrous à barillet se révèle intéressante en raison de la forte sécurité qu'ils procurent, un inconvénient lié à cette utilisation réside dans le fait que ces écrous sont généralement situés à l'intérieur de la structure rigide formant caisson, les rendant ainsi difficilement accessibles lors des nombreuses visites de contrôle que ce type d'écrou requiert. Pour avoir accès à ces écrous à barillet, l'opérateur est effectivement obligé de passer par des orifices de petites dimensions, également appelés « portes », pratiqués dans les longerons/panneaux latéraux formant le caisson. A ce titre, il est noté que les difficultés d'accès rencontrées lors des visites de contrôle sont davantage amplifiées lorsque les écrous à barillet coopèrent également avec une nervure transversale de la structure rigide formant caisson, solution qui est pourtant souvent retenue pour des raisons évidentes de tenue mécanique renforcée.

Ainsi, il est clair que les opérations de visites de contrôle et de remplacements des écrous à barillet situés à l'intérieur du caisson ne sont clairement pas optimisées, et de ce fait très pénalisantes en terme de temps.

Bien entendu, de tels assemblages vis /écrou à barillet peuvent aussi être rencontrés pour la fixation des ferrures principales des attaches moteur sur un longeron de support donné de la structure rigide, ce qui accentue encore davantage les inconvénients mentionnés ci-dessus.

### EXPOSÉ DE L'INVENTION

L'invention a donc pour but de proposer un dispositif d'accrochage et un ensemble moteur comprenant un tel dispositif remédiant aux inconvénients mentionnés ci-dessus, relatifs aux réalisations de l'art antérieur.

Pour ce faire, l'invention a pour objet un dispositif d'accrochage d'un moteur d'aéronef comportant une structure rigide et des moyens d'accrochage du moteur sur la structure rigide, cette structure rigide formant caisson comportant des longerons raccordés entre-eux par l'intermédiaire de nervures transversales, les moyens d'accrochage comportant une pluralité d'attaches moteur ainsi qu'un dispositif de reprise des efforts de poussée générés par le moteur, au moins l'un des éléments pris parmi le dispositif de reprise des efforts de poussée et les attaches moteur présentant une ferrure principale montée fixement sur l'un des longerons formant longeron de support, à l'aide de moyens de fixation comportant une vis ainsi qu'un écrou à barillet à collerette déformée assurant un serrage de la vis vissée dans cet écrou à barillet. Selon l'invention, les moyens de fixation comprennent en outre un pion de fixation monté fixement sur le longeron de support et disposant d'une portion principale située extérieurement par rapport à la structure rigide, la ferrure principale étant traversée par la portion principale du pion de fixation et plaquée contre le longeron de support par l'intermédiaire d'une rondelle d'appui en cloche entourant la portion principale et mise en contrainte par la vis la traversant, cette dernière étant vissée dans l'écrou à barillet logé dans un alésage pratiqué au sein de la portion principale du pion de fixation.

Ainsi, l'invention procure l'avantage de loger l'écrou à barillet en dehors de la structure rigide formant caisson, ce qui le rend facilement accessible pour un opérateur désirant effectuer des visites de contrôle ou un remplacement de ce même écrou à barillet. Les opérations précitées peuvent donc être largement optimisées par rapport à celles rencontrées dans l'art antérieur, ce qui se traduit avantageusement par un gain en termes de temps et de facilité d'intervention pour l'opérateur.

Naturellement, pour la fixation de la ferrure principale de l'une des attaches moteur ou du dispositif de reprise des efforts de poussée, il est possible de prévoir plusieurs assemblages de ce type, à savoir incorporant chacun un pion de fixation, également dénommé pion de cisaillement, dans lequel est logé l'écrou à barillet coopérant avec la vis servant au serrage de la rondelle d'appui en cloche, qui est quant à elle prévue pour plaquer cette ferrure principale contre le longeron de support de la structure rigide formant caisson.

De préférence, l'écrou à barillet est situé entièrement au-delà d'une extrémité d'un alésage de la ferrure principale traversé par le pion de fixation, dans une direction longitudinale de ce même pion de fixation. En d'autres termes, l'écrou à barillet logé dans le pion de fixation est situé de manière suffisamment dégagée de la ferrure principale pour autoriser son retrait du pion de fixation, sans nécessiter le retrait de la ferrure principale située extérieurement par rapport à la structure rigide formant caisson. En effet, dans un tel cas, il suffit alors uniquement de retirer la vis et la rondelle d'appui en cloche pour pouvoir avoir un accès direct à l'écrou à barillet, qui peut ensuite être facilement extrait de son logement associé par glissement.

Dans le même but, on peut prévoir que l'alésage pratiqué au sein de la portion principale du pion de fixation et servant au logement de l'écrou à barillet soit situé entièrement au-delà d'une extrémité de l'alésage de la ferrure principale traversé par le pion de fixation, dans une direction longitudinale de ce même pion de fixation.

Toujours de manière préférentielle, on prévoit que le pion de fixation comporte de plus une portion secondaire de fixation solidaire de la portion principale et traversant le longeron de support, cette portion secondaire de fixation disposant d'une extrémité filetée vissée dans un écrou situé à l'intérieur de la structure rigide formant caisson. Ainsi, c'est grâce à la coopération entre cet écrou et l'extrémité filetée que le pion de fixation se retrouve monté fixement sur le longeron de support, contre lequel un épaulement de la portion principale de ce pion peut être plaqué pour assurer le serrage.

De plus, la portion secondaire de fixation traverse également une semelle de l'une des nervures transversales de la structure rigide, contre laquelle l'écrou est plaqué. En intégrant l'une des nervures transversales dans le montage, cela permet de renforcer le maintien de la ferrure principale par rapport à la structure rigide, et d'assurer une meilleure transmission des efforts provenant du moteur et se dirigeant vers la voilure ou la partie arrière du fuselage de l'aéronef.

En outre, l'invention a également pour objet un ensemble moteur comprenant un moteur tel qu'un turboréacteur et un dispositif d'accrochage de ce moteur, le dispositif d'accrochage étant tel que celui qui vient d'être décrit.

Enfin, l'invention aussi pour objet un aéronef comportant au moins un tel ensemble moteur, assemblé sur une aile ou sur une partie arrière de fuselage de cet aéronef.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue de côté d'un ensemble moteur pour aéronef, comprenant un dispositif d'accrochage selon un mode de réalisation préféré de la présente invention ;
- la figure 2 représente une vue partielle en perspective du dispositif d'accrochage montré sur la figure 1 ;
- la figure 3 représente une vue en coupe de moyens de fixation appartenant au dispositif d'accrochage montré sur les figures 1 et 2, et servant au montage de la ferrure principale du dispositif de reprise de poussée, sur la structure rigide de ce dispositif d'accrochage ; et
- la figure 4 représente un écrou à barillet appartenant aux moyens de fixation montrés sur la figure 3, servant au montage de la ferrure principale du dispositif de reprise de poussée, sur la structure rigide du dispositif d'accrochage.

### EXPOSÉ DÉTAILLÉ DE MODES DE RÉALISATION PRÉFÉRÉS

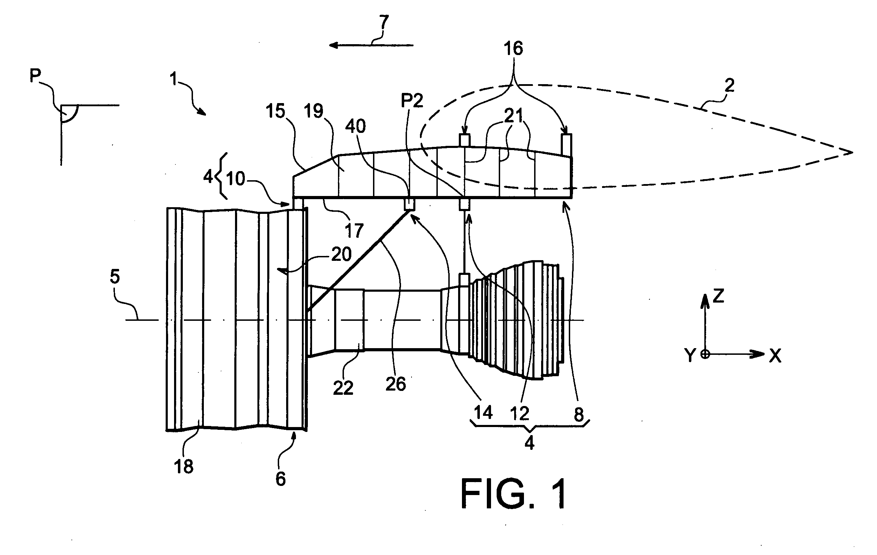

En référence à la figure 1, on voit un ensemble moteur 1 pour aéronef destiné à être fixé sous une aile 2 de cet aéronef représentée uniquement schématiquement en pointillés pour des raisons de clarté, cet ensemble 1 comportant un dispositif d'accrochage 4 selon un mode de réalisation préféré de la présente invention, ainsi qu'un moteur 6 tel qu'un turboréacteur accroché sous ce dispositif 4.

Globalement, le dispositif d'accrochage 4 comporte une structure rigide 8 portant des moyens d'accrochage du moteur 6, ces moyens d'accrochage disposant d'une pluralité d'attaches moteur 10, 12, ainsi que d'un dispositif de reprise des efforts de poussée 14 générés par le moteur 6.

A titre indicatif, il est noté que l'ensemble 1 est destiné à être entouré d'une nacelle (non représentée), et que le dispositif d'accrochage 4 comporte une autre série d'attaches 16 permettant d'assurer la suspension de cet ensemble 1 sous la voilure 2 de l'aéronef.

Dans toute la description qui va suivre, par convention, on appelle X la direction longitudinale du dispositif 4 qui est également assimilable à la direction longitudinale du turboréacteur 6, cette direction X étant parallèle à un axe longitudinal 5 de ce turboréacteur 6. D'autre part, on appelle Y la direction orientée transversalement par rapport au dispositif 4 et également assimilable à la direction transversale du turboréacteur 6, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par le turboréacteur 6, cette direction étant représentée schématiquement par la flèche 7.

Sur la figure 1, on peut voir les deux attaches moteur 10, 12, la série d'attaches 16, le dispositif de reprise des efforts de poussée 14, et la structure rigide 8 du dispositif d'accrochage 4. Les autres éléments constitutifs non représentés de ce dispositif 4, tels que la structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée.

D'autre part, il est indiqué que le turboréacteur 6 dispose à l'avant d'un carter de soufflante 18 de grande dimension délimitant un canal annulaire de soufflante 20, et comporte vers l'arrière un carter central 22 de plus petite dimension, renfermant le coeur de ce turboréacteur. Les carters 18 et 20 sont bien entendu solidaires l'un de l'autre.

Comme on peut l'apercevoir sur la figure 1, les attaches moteur 10, 12 du dispositif 4 sont prévues au nombre de deux, et respectivement dénommées attache moteur avant et attache moteur arrière.

Dans ce mode de réalisation préféré de la présente invention, la structure rigide 8 prend la forme d'un caisson s'étendant de l'arrière vers l'avant, sensiblement selon la direction X.

Le caisson 8 prend alors la forme d'un mât de conception similaire à celle habituellement observée pour les mâts d'accrochage de turboréacteurs, notamment en ce sens qu'il est réalisé par l'assemblage d'un longeron supérieur 15, d'un longeron inférieur 17, et de deux longerons / panneaux latéraux 19 (un seul étant visible en raison de la vue de côté), ces éléments 15, 17, 19 étant raccordés entre eux par l'intermédiaire de nervures transversales 21 prenant chacune globalement la forme d'un rectangle. Ainsi, les nervures 21 s'étendent dans des plans YZ, les longerons 15, 17 s'étendent grossièrement dans des plans XY, et les panneaux latéraux 19 dans des plans XZ.

Les moyens d'accrochage de ce mode de réalisation préféré comportent tout d'abord l'attache moteur avant 10 interposée entre une extrémité avant de la structure rigide 8, pouvant prendre la forme d'une pyramide, et une partie supérieure du carter de soufflante 18. D'autre part, l'attache moteur arrière 12 est quant à elle interposée entre la structure rigide 8 et le carter central 22 du turboréacteur 6.

Le dispositif de reprise des efforts de poussée 14 est fixé à la structure rigide 8, également appelée structure primaire, en un point du longeron inférieur 17 de celle-ci situé entre les deux points de fixation des attaches moteur avant 10 et arrière 12, dans la direction X.

Globalement, le dispositif de reprise 14 présente deux bielles latérales de reprise des efforts de poussée 26 (une seule étant visible sur la figure 1), chacune de ces bielles comportant une extrémité avant raccordée au carter de soufflante 18, par exemple sur ou à proximité d'un plan médian horizontal du turbomoteur 6.

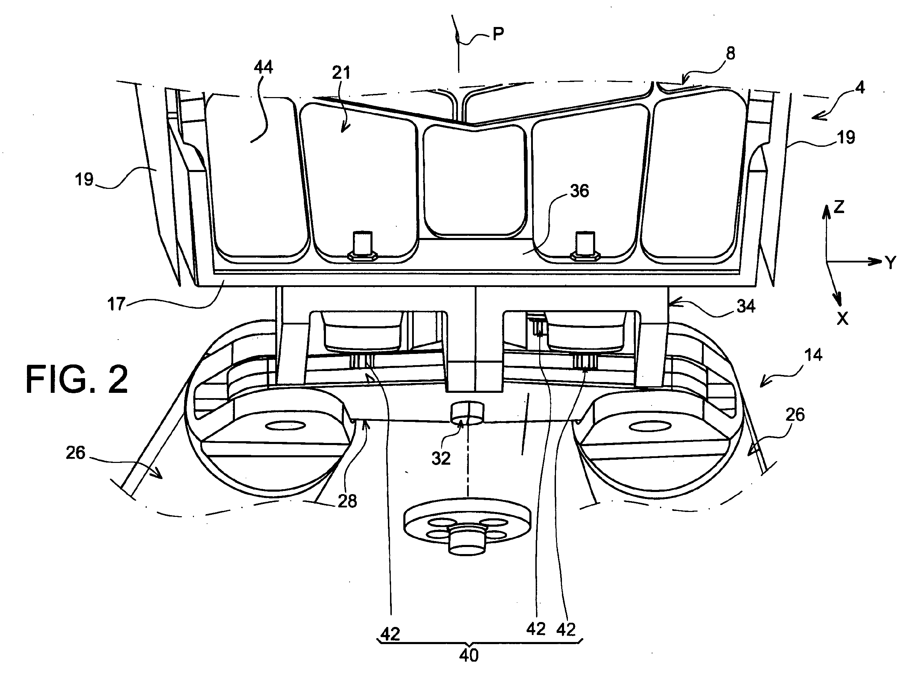

La partie arrière de ce dispositif de reprise 14 va à présent être détaillé en référence à la figure 2.

Sur cette figure, on peut apercevoir que les deux bielles latérales 26, disposées de part et d'autre du plan médian vertical P du dispositif d'accrochage correspondant également à un plan médian vertical du turboréacteur, ont chacune une extrémité arrière raccordée de façon articulée à un palonnier 28, par l'intermédiaire d'un système d'axe classique (non représenté).

Le palonnier 28 est articulé sur un axe d'articulation 32 positionné entre les deux systèmes d'axe précités, qui sont quant à eux disposés symétriquement par rapport au plan médian vertical P du dispositif 4. Par ailleurs, l'axe d'articulation 32 peut faire partie intégrante d'une ferrure principale 34 du dispositif de reprise 14, et être constitué par deux demi-cylindres appartenant chacun à un élément de ferrure de la ferrure principale double 34 montrée sur la figure 2. De façon connue de l'homme du métier, on peut également voir que la semelle inférieure 36 est en appui contre une surface intérieure du longeron de support 17, tandis que la surface extérieure de ce dernier est épousée par la ferrure principale 34, qui prend donc de préférence la forme d'une ferrure double.

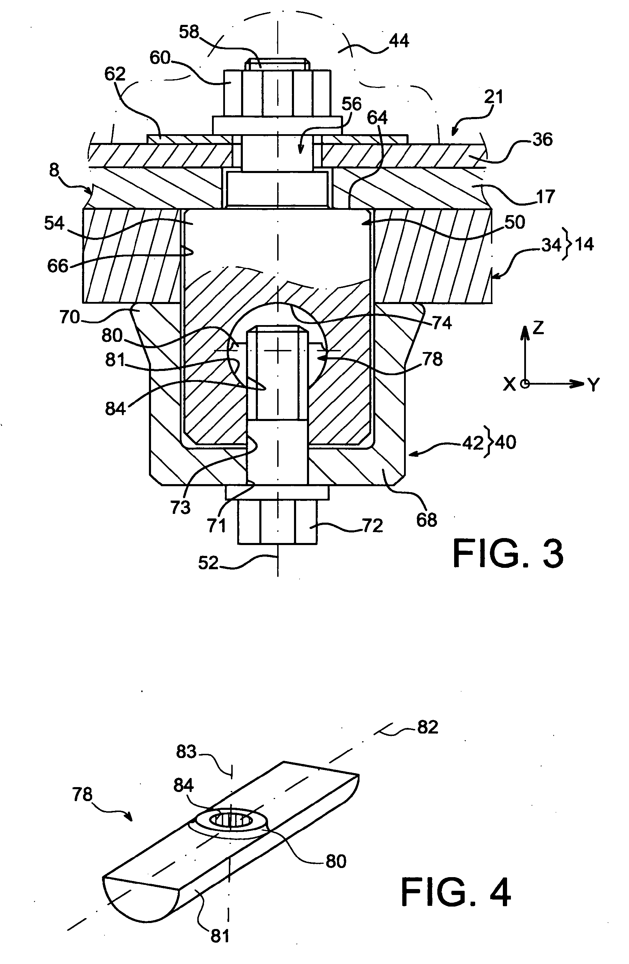

Le montage sur le longeron inférieur de support 17 de cette ferrure principale 34, également appelée ferrure de support de palonnier, est réalisé à l'aide de moyens de fixation spécifiques à la présente invention, qui sont référencés 40 sur la figure 2. A ce titre, on peut voir que plusieurs assemblages 42 identiques ou similaires peuvent constituer lesdits moyens de fixation 40, ces assemblages 42, par exemple prévus au nombre de quatre (seuls trois d'entre eux étant visibles sur la figure 2), pouvant être disposés symétriquement par rapport au plan vertical médian P, et répartis de façon équitable de part et d'autre d'un flan transversal 44 de la nervure 21. Néanmoins, un seul de ces assemblages 42 sera décrit ci-après, en référence à la figure 3.

En référence donc à la figure 3, on peut effectivement apercevoir l'un des assemblages 42 appartenant aux moyens de fixation 40 servant au montage de la ferrure principale 34 du dispositif 14 sur la structure rigide 8, et en particulier sur le longeron inférieur de support 17 dans le cas préféré envisagé où l'ensemble moteur est destiné à être suspendu sous la voilure de l'aéronef.

L'assemblage 42 comporte tout d'abord un pion de fixation 50, également appelé pion de cisaillement, disposant d'un axe longitudinal 52 qui est globalement agencé selon la direction Z, et donc orthogonalement au longeron de support 17. A titre indicatif, l'ensemble des éléments de l'assemblage 42 décrits ci-après sont concentriques, tous centrés sur ce même axe 52 du pion 50, définissant une direction longitudinale de ce dernier.

Plus précisément, le pion 50 comporte une portion principale 54 constituant une portion inférieure, ainsi qu'une portion secondaire de fixation 56 solidaire de la portion 54 et située au-dessus de celle-ci, et de préférence réalisée d'un seul tenant avec cette même portion principale 54.

La portion secondaire de fixation 56, présentant un diamètre moyen de dimension plus faible que celui de la portion principale 54, dispose d'une extrémité supérieure libre filetée 58, vissée dans un écrou 60 situé à l'intérieur de ladite structure rigide 8. Comme cela est visible sur la figure 3, cet écrou 60 est en appui contre une semelle inférieure 36 de l'une des nervures transversales 21 elle-même en appui contre le longeron 17, et se voit éventuellement couplé à un système classique anti-rotation 62 interposé entre une partie inférieure d'appui de cet écrou, et la semelle inférieure 36. A cet égard, il est indiqué que la semelle 36 fait partie, avec une semelle supérieure et deux semelles latérales (non représentées) de cette nervure, d'un ensemble formant le cadre extérieur de la nervure rectangulaire, sur lequel sont montés les longerons/panneaux du caisson et au sein duquel se trouve le flan transversal 44 de la nervure.

A ce propos, on peut prévoir que la partie inférieure d'appui de l'écrou dispose d'une paroi latérale comportant une partie plane en appui plan contre ledit flan transversal 44 de la nervure 21, permettant ainsi à cet écrou d'être bloqué en rotation selon son axe par le biais dé cet appui plan. Ainsi, le montage du pion 50 s'effectue en vissant son extrémité filetée 58 dans l'écrou 60 bloqué en rotation.

Depuis son extrémité filetée 58 coopérant avec l'écrou 60 plaqué contre la semelle 36, la portion secondaire de fixation s'étend vers le bas selon l'axe 52 en traversant successivement le système anti-rotation 62, la semelle 36 et le longeron inférieur de support 17, toutes ces pièces disposant naturellement chacun d'un alésage permettant le passage du pion.

Au niveau de l'extrémité inférieure de la portion secondaire 56, le pion 50 se prolonge vers le bas par la portion principale 54 disposant d'une forme sensiblement cylindrique de section circulaire, et n'étant préférentiellement pas filetée.

Au niveau de l'extrémité supérieure de la portion principale 54, celle-ci définit une surface d'épaulement 64 orientée selon un plan YZ et venant au contact d'une surface extérieure du longeron 17. Cela implique notamment que l'on puisse considérer que cette portion principale 54 se trouve située entièrement extérieurement par rapport au caisson 8, sur lequel le pion 50 est donc assemblé fixement grâce aux deux appuis opposés selon la direction Z entre d'une part l'écrou 60 et la semelle 36, et d'autre part la surface d'épaulement 64 et le longeron 17.

Toujours en référence à la figure 3, on peut apercevoir que la ferrure principale 34 du dispositif de reprise 14 présente un alésage 66 selon l'axe 52, qui est traversé par la portion principale 54 faisant donc saillie vers le bas de cet alésage, dans la direction Z.

Pour assurer le placage de la ferrure principale 34 contre le longeron de support 17, l'assemblage 42 comprend une rondelle d'appui en cloche 68, la cloche s'ouvrant vers le haut de manière à pouvoir y loger une partie inférieure de la portion principale 54, qui se voit donc entourée par cette même cloche.

Une lèvre d'extrémité circulaire 70 de la cloche est en appui contre une surface inférieure de la ferrure principale opposée à une surface supérieure en appui contre le longeron 17, ce qui permet par conséquent d'assurer le placage de cette ferrure 34 contre ce longeron 17. De plus, la rondelle en cloche 70 centrée sur l'axe 52 est elle-même mise en contrainte dans le direction Z par l'intermédiaire d'une vis 72 également centrée sur l'axe 52, comme cela va être décrit ci-dessous.

Effectivement, cette vis 72 dispose d'une tête orientée vers le bas, en appui contre une surface extérieure de la rondelle en cloche 68. Elle s'étend alors vers le haut en traversant successivement la rondelle 68 et une partie inférieure de la portion principale 54 du pion 50, chacune pourvue d'un alésage 71, 73 prévu à cet effet selon la direction Z. Ensuite, la vis 72 a sa partie d'extrémité filetée qui débouche dans un autre alésage 74 pratiqué dans la portion principale 54 du pion 50, selon une direction orthogonale à son axe longitudinal 52, comme par exemple la direction X tel que cela est représenté. Bien entendu, ce montage est autorisé en prévoyant que l'alésage 73 de passage de vis débouche dans l'alésage 74 traversant le pion 50, et dans lequel est logé un écrou à barillet 78 tel que cela va maintenant être décrit en référence aux figures 3 et 4.

En effet, dans l'alésage 74 de section transversale circulaire, il est prévu un écrou à barillet 78 à collerette déformée 80 assurant un serrage de la vis 72 vissée dans cet écrou, ce dernier prenant une forme quelconque classique et connue de l'homme du métier. Il est rappelé qu'un écrou à barillet est d'une façon générale un écrou qui présente une surface extérieure cylindrique 81 dont l'axe 82 (figure 4) est perpendiculaire à l'axe 83 du trou taraudé 84 qui le traverse, cet axe 83 étant dans l'assemblage concerné confondu avec l'axe 52 du pion 50. Un écrou à barillet peut être réalisé, selon le cas, en une ou deux pièces. Dans le second cas, il comprend un écrou flottant, monté dans un logement formé dans un support d'écrou cylindrique.

Ainsi, l'écrou à barillet 78, bloqué par l'alésage 74 en rotation et en translation selon l'axe 83 du trou taraudé 84, permet un montage aisé de la vis 72 destinée à être vissée dans ce même trou taraudé 84 se prolongeant par la collerette 80 déformée par exemple elliptiquement, pour permettre le blocage en rotation selon la direction Z de cette vis 72.

L'une des particularités associées à cet assemblage 42 est donc que l'écrou à barillet 78 est situé extérieurement par rapport au caisson 8, de sorte que son accès ne pose aucun problème particulier aux opérateurs. A cet égard, on prévoit pour permettre une extraction aisée de cet écrou 78 logé dans l'alésage 74, de faire en sorte que cet écrou 78 se situe entièrement au-delà d'une extrémité de l'alésage 66 de la ferrure principale traversé par la portion 54, dans la direction Z et vers le bas, c'est-à-dire dans le sens allant du longeron de support 17 vers la ferrure principale 34. L'écrou 78 est par conséquent situé de manière suffisamment dégagée de la ferrure principale 34 pour autoriser son retrait de l'alésage 74 indifféremment débouchant ou traversant, sans nécessiter le retrait de cette ferrure principale 34. Dans un tel cas, il suffit en effet uniquement de retirer la vis 72 et la rondelle d'appui en cloche 68 pour pouvoir avoir un accès direct à l'écrou 78, qui peut ensuite être facilement extrait de son logement par glissement.

Comme cela est montré sur la figure 3, on fait de préférence en sorte que l'intégralité de l'alésage 74 prévu pour le logement de l'écrou à barillet 78 soit entièrement situé au-delà d'une extrémité de l'alésage 66 de la ferrure principale traversé par la portion 54, dans la direction Z et vers le bas, c'est-à-dire dans le sens allant du longeron de support 17 vers la ferrure principale 34.

Bien entendu, diverses modifications peuvent être apportées par l'homme du métier au dispositif d'accrochage 4 et à l'ensemble moteur 1 qui viennent d'être décrits, uniquement à titre d'exemples non limitatifs. A cet égard, on peut notamment indiquer qui si l'ensemble moteur 1 a été présenté dans une configuration adaptée pour qu'il soit suspendu sous la voilure de l'aéronef, cet ensemble 1 pourrait également se présenter dans une configuration différente lui permettant d'être monté au-dessus de cette même voilure, voire sur une partie arrière du fuselage de cet aéronef. De plus, si les moyens de fixation spécifiques à la présente invention ont été décrits pour l'assemblage de la ferrure principale du dispositif de reprise de poussée sur la structure rigide du mât d'accrochage, ces mêmes moyens pourraient également/alternativement être employés pour assurer l'assemblage de la ferrure principale d'une attache moteur sur cette même structure rigide, sans sortir du cadre de l'invention.

## Revendications

1. Dispositif d'accrochage (4) d'un moteur (6) d'aéronef comportant une structure rigide (8) et des moyens d'accrochage du moteur (6) sur ladite structure rigide (8), ladite structure rigide formant caisson comportant des longerons (15, 17, 19) raccordés entre-eux par l'intermédiaire de nervures transversales (21), lesdits moyens d'accrochage comportant une pluralité d'attaches moteur (10, 12) ainsi qu'un dispositif de reprise des efforts de poussée (14) générés par le moteur (6), au moins l'un desdits éléments pris parmi le dispositif de reprise des efforts de poussée (14) et les attaches moteur (10, 12) présentant une ferrure principale (34) montée fixement sur l'un desdits longerons formant longeron de support (17), à l'aide de moyens de fixation (40) comportant une vis (72) ainsi qu'un écrou à barillet (78) à collerette déformée (80) assurant un serrage de ladite vis (72) vissée dans ledit écrou à barillet,
**caractérisé en ce que** lesdits moyens de fixation (40) comprennent en outre un pion de fixation (50) monté fixement sur ledit longeron de support (17) et disposant d'une portion principale (54) située extérieurement par rapport à la structure rigide (8), ladite ferrure principale (34) étant traversée par ladite portion principale (54) du pion de fixation (50) et plaquée contre ledit longeron de support (17) par l'intermédiaire d'une rondelle d'appui en cloche (68) entourant ladite portion principale (54) et mise en contrainte par ladite vis (72) la traversant, cette dernière étant vissée dans ledit écrou à barillet (78) logé dans un alésage (74) pratiqué au sein de ladite portion principale (54) du pion de fixation (50).

2. Dispositif d'accrochage (4) selon la revendication 1, **caractérisé en ce que** ledit écrou à barillet (78) est situé entièrement au-delà d'une extrémité d'un alésage (66) de la ferrure principale (34) traversé par ledit pion de fixation (50), dans une direction longitudinale de ce même pion de fixation.

3. Dispositif d'accrochage (4) selon la revendication 1, **caractérisé en ce que** ledit alésage (74) pratiqué au sein de ladite portion principale (54) du pion de fixation (50) et servant au logement de l'écrou à barillet (78) est situé entièrement au-delà d'une extrémité d'un alésage (66) de la ferrure principale (34) traversé par ledit pion de fixation (50), dans une direction longitudinale de ce même pion de fixation.

4. Dispositif d'accrochage (4) selon l'une quelconque des revendications précédentes, **caractérisé en ce que** ledit pion de fixation (50) comporte de plus une portion secondaire de fixation (56) solidaire de ladite portion principale (54) et traversant ledit longeron de support (17), ladite portion secondaire de fixation (56) disposant d'une extrémité filetée (58) vissée dans un écrou (60) situé à l'intérieur de ladite structure rigide (8) formant caisson.

5. Dispositif d'accrochage (4) selon la revendication 4, **caractérisé en ce que** ladite portion secondaire de fixation (56) traverse également une semelle (36) de l'une desdites nervures transversales (21) de la structure rigide (8), contre laquelle ledit écrou (60) est plaqué.

6. Ensemble moteur (1) comprenant un moteur (6) et un dispositif d'accrochage (4) du moteur (6), **caractérisé en ce que** ledit dispositif d'accrochage est un dispositif selon l'une quelconque des revendications précédentes.

7. Aéronef comportant au moins un ensemble moteur selon la revendication 6, assemblé sur une aile ou sur une partie arrière de fuselage de cet aéronef.

## Claims

1. A device (4) for attaching an aircraft engine (6) including a rigid structure (8) and means for attaching the engine (6) on said rigid structure (8), said rigid structure forming a structure box including spars (15, 17, 19) connected together via transverse ribs (21), said attachment means including a plurality of engine attachment members (10, 12) as well as a device (14) for absorbing thrust loads generated by the engine (6), at least one of said components being taken from the thrust-load absorbing device (14) and the engine attachment members (10, 12) having a main fitting (34) fixedly mounted on one of said spars forming a supporting spar (17), by fixing means (40) including a screw (72) as well as a barrel nut (78) with a reformed flange (80) providing the tightening of said screw (72) screwed into said barrel nut,
**characterized in that** said fixing means (40) further comprise a fixing peg (50) fixedly mounted on said supporting spar (17) and having a main portion (54) located on the outside relatively to the rigid structure (8), said main fitting (34) being crossed by said main portion (54) of the fixing peg (50) and pressed against said supporting spar (17) via a bell-shaped supporting washer (68) surrounding said main portion (54) and stressed by said screw (72) crossing it, the latter being screwed into said barrel nut (78) housed in a bore (74) made within said main portion (54) of the fixing peg (50).

2. The attachment device (4) according to claim 1, **characterized in that** said barrel nut (78) is entirely located beyond an end of a bore (66) of the main fitting (34) crossed by said fixing peg (50), in a longitudinal direction of this same fixing peg.

3. The attachment device (4) according to claim 1, **characterized in that** said bore (74) made within said main portion (54) of the fixing peg (50), and used for housing the barrel nut (78) is entirely located beyond an end of a bore (66) of the main fitting (34) crossed by said fixing peg (50), in a longitudinal direction of this same fixing peg.

4. The attachment device (4) according to any of the preceding claims, **characterized in that** said fixing peg (50) further includes a secondary fixing portion (56) integral with said main portion (54) and crossing said supporting spar (17), said secondary fixing portion (56) having a threaded end (58) screwed into a nut (60) located inside said rigid box-forming structure (8).

5. The attachment device (4) according to claim 4, **characterized in that** said secondary fixing portion (56) also crosses a sole (36) of one of said transverse ribs (21) of the rigid structure (8), against which said nut (60) is pressed.

6. An engine assembly (1) comprising an engine (6) and a device (4) for attaching the engine (6), **characterized in that** said attachment device is a device according to any of the preceding claims.

7. An aircraft including at least one engine assembly according to claim 6, assembled on a wing or on a rear fuselage portion of this aircraft.

## Patentansprüche

1. Aufhängungsvorrichtung (4) für ein Flugzeugtriebwerk (6), die eine starre Struktur (8) und Mittel zur Aufhängung des Triebwerks (6) an der starren Struktur (8) umfasst, wobei die starre Struktur einen Kasten bildet, der Längsträger (15, 17, 19) umfasst, die durch Querrippen (21) miteinander verbunden sind, wobei die Aufhängungsmittel mehrere Triebwerkbefestigungen (10, 12) sowie eine Vorrichtung zur Aufnahme von durch das Triebwerk (6) erzeugten Schubkräften (14) umfassen, wobei mindestens eines der Elemente von der Vorrichtung zur Aufnahme von Schubkräften (14) und den Triebwerkbefestigungen (10, 12) einen Hauptbeschlag (34) aufweist, der an einem der einen Trägerholm (17) bildenden Längsträger durch Befestigungsmittel (40), die eine Schraube (72) sowie eine Spannschlossmutter (78) mit verformtem Flansch (80), wodurch ein Festziehen der in die Spannschlossmutter eingeschraubten Schraube (72) gewährleistet ist, umfassen, fest angebracht ist,
**dadurch gekennzeichnet, dass** die Befestigungsmittel (40) ferner einen Befestigungsbolzen (50) umfassen, der fest an dem Trägerholm (17) angebracht ist und einen Hauptteil (54) aufweist, der in Bezug auf die starre Struktur (8) außen befindlich ist, wobei der Hauptbeschlag (34) vom Hauptteil (54) des Befestigungsbolzens (50) durchsetzt ist, und mittels einer Stützscheibe in Glockenform (68), die den Hauptteil (54) umgibt und die durch die diese durchdringende Schraube (72) eingespannt ist, an den Längsholm (17) angeschlagen ist, wobei letztere in die Spannschlossmutter (78), die sich in einer Bohrung (74) befindet, die im Inneren des Hauptteils (54) des Befestigungsbolzens (40) ausgeführt ist, eingeschraubt ist.

2. Aufhängungsvorrichtung (4) nach Anspruch 1, **dadurch gekennzeichnet, dass** sich die Spannschlossmutter (78) in Längsrichtung des Befestigungsbolzens vollständig jenseits eines Endes einer Bohrung (66) des Hauptbeschlags (34), die vom Befestigungsbolzen (50) durchsetzt ist, befindet.

3. Aufhängungsvorrichtung (4) nach Anspruch 1, **dadurch gekennzeichnet, dass** sich die Bohrung (74), die im Inneren des Hauptteils (54) des Befestigungsbolzens (50) ausgeführt ist und zur Aufnahme der Spannschlossmutter (78) dient, in Längsrichtung des Befestigungsbolzens vollständig jenseits eines Endes einer Bohrung (66) des Hauptbeschlags (34), die von dem Befestigungsbolzen (50) durchsetzt ist, befindet.

4. Aufhängungsvorrichtung (4) nach einem der vorhergehenden Ansprüche, **dadurch gekennzeichnet, dass** der Befestigungsbolzen (50) ferner einen zweiten Befestigungsteil (56) umfasst, der mit dem Hauptteil (54) verbunden ist und den Längsholm (17) durchsetzt, wobei der zweite Befestigungsteil (56) ein Gewindeende (58) aufweist, das in eine Mutter (60) geschraubt ist, die sich im Inneren der einen Kasten bildenden starren Struktur (8) befindet.

5. Aufhängungsvorrichtung (4) nach Anspruch 4, **dadurch gekennzeichnet, dass** der zweite Befestigungsteil (56) auch einen Fuß (36) von einer der Querrippen (21) der starren Struktur (8), an der die Mutter (60) anliegt, durchsetzt.

6. Triebwerkanordnung (1), die ein Triebwerk (6) und eine Aufhängungsvorrichtung (4) des Triebwerks (6) umfasst, **dadurch gekennzeichnet, dass** die Aufhängungsvorrichtung eine Vorrichtung gemäß einem der vorhergehenden Ansprüche ist.

7. Flugzeug, das mindestens eine Triebwerkanordnung gemäß Anspruch 6 umfaßt, die an einer Tragfläche oder an einem hinteren Teil des Rumpfs dieses Flugzeugs angebracht ist.
